(19) **Europäisches Patentamt / European Patent Office / Office européen des brevets**

(11) **EP 4 662 658 B1**

(12) **EUROPEAN PATENT SPECIFICATION**

(45) Date of publication and mention
of the grant of the patent:
**20.05.2026  Bulletin 2026/21**

(21) Application number: **24703324.4**

(22) Date of filing: **01.02.2024**

(51) International Patent Classification (IPC):
**G10L 25/48** (2013.01)    **G10L 25/30** (2013.01)
**G10L 25/66** (2013.01)    **G10L 15/04** (2013.01)
**G10L 21/02** (2013.01)

(52) Cooperative Patent Classification (CPC):
**G10L 25/48; G10L 25/30; G10L 25/66;** G10L 15/04;
G10L 21/02

(86) International application number:
**PCT/EP2024/052468**

(87) International publication number:
**WO 2024/165413 (15.08.2024 Gazette 2024/33)**

(54) **BREATHING SIGNAL-DEPENDENT SPEECH PROCESSING OF AN AUDIO SIGNAL**

ATEMSIGNAL-ABHÄNGIGE SPRACHVERARBEITUNG EINES AUDIOSIGNALS

TRAITEMENT DE LA PAROLE D'UN SIGNAL AUDIO DEPENDANT D'UN SIGNAL RESPIRATOIRE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **09.02.2023  EP 23155738**

(43) Date of publication of application:
**17.12.2025  Bulletin 2025/51**

(73) Proprietor: **Koninklijke Philips N.V.
5656 AE Eindhoven (NL)**

(72) Inventor: **HARMA, Aki Sakari
5656 AG Eindhoven (NL)**

(74) Representative: **Philips Intellectual Property &
Standards
High Tech Campus 52
5656 AG Eindhoven (NL)**

(56) References cited:
**US-B1- 7 529 670**

• **NALLANTHIGHAL VENKATA SRIKANTH ET AL:
"Deep learning architectures for estimating
breathing signal and respiratory parameters
from speech recordings", NEURAL NETWORKS.,
vol. 141, 1 September 2021 (2021-09-01), GB,
pages 211 - 224, XP093054576, ISSN: 0893-6080,
DOI: 10.1016/j.neunet.2021.03.029**

**EP 4 662 658 B1**

**Description**

FIELD OF THE INVENTION

The invention relates to performing speech processing of an audio signal, and in particular, but not exclusively, to automatic speech recognition or speech enhancement for an audio signal capturing a speaker, e.g. performing an activity such as an exercise activity.

BACKGROUND OF THE INVENTION

Speech processing of audio signals is widely applied in a large variety of practical applications, and is becoming of increasing importance and significance for many everyday activities and devices.

For example, speech enhancement may be widely applied to provide improved clarity and reproducibility for speech being captured by audio signals such as e.g. sounds captured in a real life environment. Speech encoding is also frequently performed from captured audio. For example, speech encoding of captured audio signals is an integral part of smart phones. Another speech processing application that has become increasingly frequent in recent years is that of speech recognition to e.g. provide a user interface to a device.

For example, the speech interface of a personal assistant or home speaker makes it possible to control media, navigate features, track tracking, obtain various information services etc. simply by using a voice interface and while carrying out other activities, such as e.g. during exercising.

Speech interfaces based on Automatic Speech Recognition, ASR, are also becoming very important in controlling various devices such as wearable, nearable, and IoT consumer, health, and fitness devices. Speech is the most natural interface to interface with devices during activities which involves significant user movement and variation. As an example, US20090098981A1 discloses a fitness device with speech interface used for the communicating of the user with a virtual fitness coach. US 7 529 670B1 discloses a speech processing system where the processing is dependent on a determined pulmonary state of the speaker. The article Nallanthighal et al "Deep learning architectures for estimating breathing signal and respiratory parameters from speech recordings", Neural Networks, vol. 141, 1 September 2021, pages 211-224, XP093054576, ISSN: 0893-6080, DOI: 10.1016/j.neunet. 2021.03.29 discloses an approach for determining samples of a breathing signal from audio using a neural network.

However, whereas a lot of effort has been invested in developing and optimizing speech processing algorithms for various applications, and many highly advantageous and efficient approaches have been developed, they tend to not be optimal in all circumstances. For example, many speech processing operations have been developed for specific nominal conditions, such as nominal speaker properties, nominal acoustic environments, etc. Many speech processing applications may not provide optimum performance in scenarios where the actual conditions differ from the expected nominal conditions. A number of speech processing algorithms may also be more complex or resource demanding than desired. Adapting the speech processing to try to compensate for varying properties tend to result in a less flexible, more complex, and /or more resource demanding implementations which often do not either provide optimal performance.

Hence, an improved approach for speech processing would be advantageous. In particular an approach allowing increased flexibility, improved adaptability, an improved performance, increased quality of e.g. speech enhancement, encoding, and/or recognition, reduced complexity and/or resource usage, improved remote control of audio processing, improved adaptation to variations in speaker properties and/or activities, reduced computational load, an improved user experience, facilitated implementation and/or an improved spatial audio experience would be advantageous.

SUMMARY OF THE INVENTION

Accordingly, the Invention seeks to preferably mitigate, alleviate or eliminate one or more of the above mentioned disadvantages singly or in any combination.

According to an aspect of the invention there is provided an apparatus for speech processing of an audio signal, the apparatus comprising: an input arranged to receive the audio signal, the audio signal comprising a speech audio component for a speaker; a segmenter arranged to generate segments of the audio signal, each segment having a segment duration and consecutive segments having an intersegment duration being a time between the consecutive segments, the segment duration exceeding the intersegment duration so that consecutive segments overlap; a first generator (107) arranged to for each segment of the audio signal generate a fragment of a breathing waveform signal from the each segment of the audio signal, at least some fragments having a fragment duration exceeding the intersegment duration; a second generator (109) arranged to generate the breathing waveform signal by combining the fragments of the breathing waveform signal, second generator (109) is arranged to combine fragments of the at least some fragments by applying a weighted combination to samples of different fragments for the same time instant with weights of the weighted combination being determined from a fragment window function; and a speech processor arranged to apply a speech processing to the audio signal, the speech processing being dependent on the breathing waveform signal.

The approach may provide improved speech processing in many embodiments and scenarios. For many signals and scenarios, the approach may provide speech processing that more closely reflects variations in the properties and characteristics of the speech of the speaker. For example, it may adapt to a level of exhaustion or e.g. dyspnea of the speaker. The approach, and in particular using a segment/ fragment based processing, may provide facilitated adaptation and may in particular provide improved adapted speech processing. The approach may provide an efficient implementation and may in many embodiments allow a reduced complexity and/or resource usage.

The approach may typically provide a more accurate/ improved breathing waveform signal and may in particular in many scenarios reduce or mitigate edge effects and errors present in much segment based processing.

The speech processing may comprise speech enhancement processing, speech recognition processing, and/or speech encoding processing. A segment duration for a segment may be the duration of the time interval of the audio signal included in the segment. The intersegment duration may be the duration/ time offset/ difference between subsequent segments/ segment time intervals.

At least some fragments have a fragment duration exceeding the intersegment duration.

This may provide particularly advantageous operation and performance in many scenarios and applications.

In many embodiments, at least some of the fragments have a duration exceeding the intersegment duration by no less than 10, 20, 30, 50% or 100%. The fragment duration for a fragment may be a duration of the time interval of breathing waveform signal represented by the fragment.

The second generator is arranged to combine the fragments by applying a weighted combination to samples of different fragments for the same time instant with weights of the weighted combination being determined from a fragment window function.

This may provide improved operation and performance in many embodiments. It may in many embodiments allow facilitated, improved, and/or more efficient operation. The fragment window function may be such that weights for each sample time instant have a constant combined value (and specifically the sum of the weights for the different samples/ fragments may be constant for different time instants).

According to an optional feature of the invention, the segment duration exceeds the intersegment duration by no less than 50%.

This may provide improved operation and performance in many embodiments. The segment duration may in many embodiments be twice the intersegment duration (100% longer).

According to an optional feature of the invention, a segment of the audio signal includes at least a first part of the audio signal also included in a previous segment of the audio signal and a second part of the audio signal also included in a subsequent segment of the audio signal.

This may provide improved operation and performance in many embodiments.

In many embodiments, one or more segments include samples of both the previous and the next segment.

According to an optional feature of the invention, a sample rate of the breathing waveform signal is lower than a sample rate of the audio signal by a factor of no less than 10, or in some embodiments by a factor of no less than 20, 50, or 100.

This may provide improved operation and performance in many embodiments, and in particular may include a much reduced complexity and reduced resource usage. It may for example in many embodiments allow real time processing using devices with limited computational resource.

According to an optional feature of the invention, the first generator may be arranged to generate the fragments to have a lower sample rate than the segments of the audio signal.

This may provide improved operation and performance in many embodiments.

According to an optional feature of the invention, the segmenter is arranged to generate the segments to have a lower sample rate than the audio signal.

This may provide improved operation and performance in many embodiments.

According to an optional feature of the invention, the first generator comprises a trained artificial neural network having input nodes for receiving samples of a segment of the audio signal and output nodes arranged to provide samples of a fragment of the breathing waveform signal for the segment of the audio signal.

The approach may provide a particularly advantageous arrangement which may in many embodiments and scenarios allow a facilitated and/or improved possibility of utilizing artificial neural networks in generating a breathing waveform signal for use in adapting and optimizing speech processing, including typically speech enhancement and/or recognition.

The approach may provide an efficient implementation and may in many embodiments allow a reduced complexity and/or resource usage.

The artificial neural network is a trained artificial neural network.

The artificial neural network may be a trained artificial neural network trained by training data including training speech audio signals and training breathing waveform signals generated from measurements of a breathing waveform;

the training employing a cost function comparing the training breathing waveform signals to breathing waveform signals generated by the artificial neural network for the training speech audio signals. The artificial neural network may be a trained artificial neural network(s) trained by training data including training speech audio signals representing a range of relevant speakers in a range of different states and performing different activities.

The artificial neural network may be a trained artificial neural network trained by training data having training input data comprising training speech audio signals, and using a cost function including a contribution indicative of a difference between measured training breathing waveform signals and breathing waveform signal generated by the artificial neural network in response to the training speech audio signals.

According to an optional feature of the invention, the first generator comprises a model for human breathing and wherein the first generator is arranged to generate the fragments from the model and to adapt a parameter of the model in response to the segments.

This may provide improved operation and performance in many embodiments. The model may receive a given segment of the audio signal as an input and generate a fragment of the breathing waveform signal as an output for the given segment.

According to an optional feature of the invention, the segmenter is arranged to apply a frequency transform to the audio signal and to generate each segment as a matrix of time- frequency samples comprising at least samples for two different time intervals and for two different frequency ranges.

This may provide improved operation and performance in many embodiments. The approach may allow facilitated operation and provide a more efficient representation of the properties of the audio signal such that these are suitable for determining a breathing waveform signal.

According to an optional feature of the invention, the apparatus further comprises an adapter arranged to adapt at least one of the intersegment duration, and the segment duration in response to at least one of a property of the audio signal and a property of the breathing waveform signal.

This may provide improved operation and performance in many embodiments.

In some embodiments, the speech processing includes speech recognition processing generating a plurality of recognition term candidates from the audio signal; and the speech processor is arranged to select between the recognition term candidates in response to the breathing waveform signal.

This may provide advantageous speech recognition in many scenarios and may allow this to be achieved with low complexity and resource demand. For example, it may allow the adaptation and consideration of the breathing waveform signal to be implemented as a post-processing applied to results of an existing speech recognition algorithm. The approach may provide improved backwards compatibility.

In some embodiments, the speech processer is arranged to determine a breathing rate estimate from the breathing waveform signal and to adapt the speech processing in dependence on the breathing rate.

This may provide improved operation and performance in many embodiments. A breathing rate parameter may be a particularly suitable parameter for adapting speech as there may typically be a high correlation between some speech properties and the breathing rate.

In some embodiments, the speech processor is arranged to determine a timing property for inspiration intervals from the breathing waveform signal and to adapt the speech processing in dependence on the timing property for inspiration intervals.

This may provide improved operation and performance in many embodiments. The timing property may typically be a duration, repetition time/ frequency, and/or time of the inspiration/ breathing in intervals.

In some embodiments, the speech processor is arranged to determine inspiration/ breathing in time segments of the audio signal from the timing property and to attenuate the audio signal during the inspiration/ breathing in time segments.

This may provide improved operation and performance in many embodiments. The attenuation may be a partial attenuation or a full attenuation (muting) of the audio signal.

In some embodiments, the speech processor is arranged to determine inspiration/ breathing in time segments of the audio signal from the timing property and to exclude the inspiration/ breathing in time segments from a speech recognition processing being applied to the audio signal.

This may provide improved operation and performance in many embodiments.

In some embodiments, the speech processer is arranged to determine a breathing sound level during inspiration/ breathing in from the breathing waveform signal and to adapt the speech processing in dependence on the breathing sound level during inspiration/ breathing in.

This may provide improved operation and performance in many embodiments.

In some embodiments, the speech processor comprises a human breathing model for determining a breathing property for the speaker and the speech processor is further arranged to adapt the speech processing in response to the breathing property; and to adapt the human breathing model in dependence on the speaker data.

This may provide improved operation and/or performance in many embodiments.

According to an aspect of the invention, there is provided a method comprising: receiving the audio signal, the audio signal comprising a speech audio component for a speaker; generating segments of the audio signal, each segment having a segment duration and a time interval between consecutive segments having an intersegment duration being a time between the consecutive segments, the segment duration exceeding the intersegment duration so that consecutive segments overlap; generating a fragment of breathing waveform signal for each segment of the audio signal from the each segment of the audio signal; generating the breathing waveform signal by combining the fragments of the breathing waveform signal, the combining comprising combining fragments of the at least some fragments by applying a weighted combination to samples of different fragments for the same time instant with weights of the weighted combination being determined from a fragment window function; and applying a speech processing to the audio signal, the speech processing being dependent on the breathing waveform signal.

The speech processing may comprise a speech enhancement processing.

The approach may provide improved speech enhancement and may in many scenarios allow an improved speech signal to be generated.

The speech processing may comprise a speech recognition processing.

The approach may provide improved speech recognition. It may in many scenarios allow a more accurate detection of words, terms, and sentence, and may in particular allow improved speech recognition for speakers in a variety of situations, states, and activities. For example, it may allow improved speech detection for people exercising.

These and other aspects, features and advantages of the invention will be apparent from and elucidated with reference to the embodiment(s) described hereinafter.

BRIEF DESCRIPTION OF THE DRAWINGS

Embodiments of the invention will be described, by way of example only, with reference to the drawings, in which

FIG. 1 illustrates some elements of an example of an audio apparatus in accordance with some embodiments of the invention;

FIG. 2 illustrates an example of segmentation of an audio signal;

FIG. 3 illustrates an example of a structure of an artificial neural network;

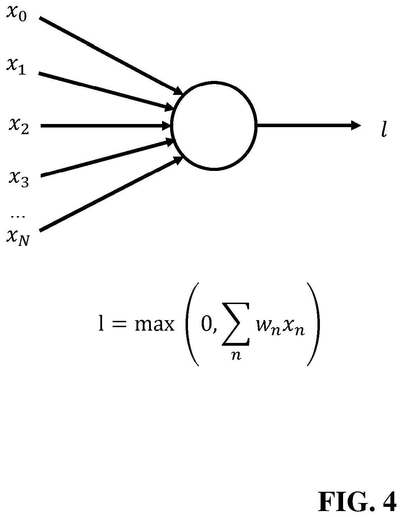

FIG. 4 illustrates an example of a node of an artificial neural network;

FIG. 5 illustrates some elements of an example of a training setup for an artificial neural network;

FIG. 6 illustrates an example of prediction errors for a breathing waveform signal;

FIG. 7 illustrates an example of a process for estimating a breathing waveform signal from an audio signal in accordance with some embodiments of the invention; and

FIG. 8 illustrates some elements of a possible arrangement of a processor for implementing elements of an apparatus in accordance with some embodiments of the invention.

DETAILED DESCRIPTION OF SOME EMBODIMENTS OF THE INVENTION

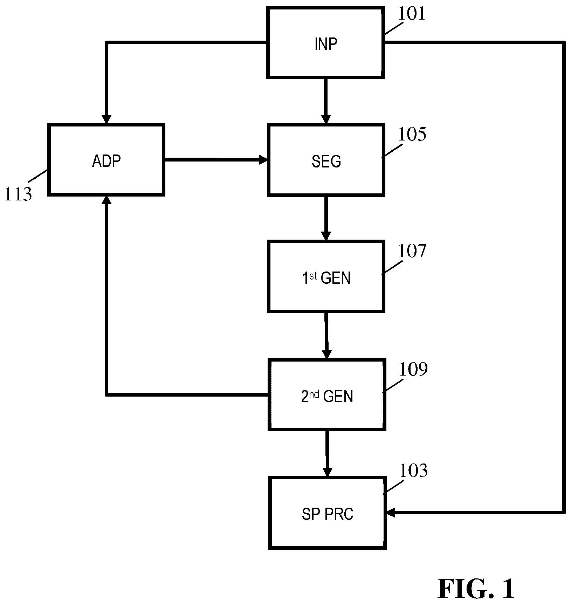

FIG. 1 illustrates some elements of a speech processing apparatus in accordance with some embodiments of the invention. The speech processing apparatus may be suitable for providing improved speech processing for speakers in many different environments and scenarios, such as for example if the speaker is exercising.

The speech processing apparatus comprises a receiver/ input 101 which is arranged to receive an audio signal that comprises a speech audio component. The audio signal may specifically be a microphone signal representing audio captured by a microphone. The audio signal may specifically be a speech signal, and may in many embodiments be a speech signal captured by a microphone arranged to capture the speech of a single person, such as a microphone of a headset, a smartphone, or a body worn microphone. Thus, the audio signal will include a speech audio component (which also henceforth will be referred to as a speech signal) as well as possibly other sounds, such as background sounds from the environment.

The speech processing apparatus further comprises a speech processing 103 which is arranged to apply a speech processing to the received audio signal, and thus specifically to the speech audio component of the audio signal. The speech processing may specifically be a speech enhancement processing, a speech encoding, or a speech recognition process.

In the approach, the speech processing circuit 103 is arranged to perform the speech processing in response to a breathing waveform signal. The speech processing apparatus is arranged to generate a breathing waveform signal from the audio signal. The breathing waveform signal is indicative to the lung air volume of the speaker as a function of time. It thus reflects the breathing of the speaker and the flow of air into and out of the lungs of the speaker.

The speech processing apparatus is arranged to process the audio signal in order to extract information indicative of the breathing of the speaker captured by the audio signal. The audio apparatus may be arranged to receive samples of the audio input signal and produce a time series or parameters representing a time series of lung air volume measurements/ estimates.

The breathing waveform signal may thus be a time varying signal that reflects variations of the breathing of the speaker, and specifically may reflect changes in lung volume resulting from the speaker breathing. The breathing waveform signal may in some embodiments directly represent the current lung volume. In other embodiments, the breathing waveform signal may for example represent a change in the current lung volume, such as for example when the breathing waveform signal represents a flow of air being inhaled/ exhaled (breathing in/ breathing out).

Conventionally, a breathing waveform signal can be captured using a separate sensor device such as a respiratory belt worn while the subject is talking. In the current approach, the determiner may however determine a breathing waveform signal even if no such sensor data is available by deriving the breathing waveform signal from speech data. As a low complexity example, the determiner may use speech activity detection (SAD) algorithms to segment the speech data into speech and non-speech segments. Based on the knowledge that inhaling takes place during speech pauses, the determiner 105 could use the durations and frequency of pauses as a proxy for the breathing behavior and thus determine the breathing waveform signal accordingly. In many embodiments, more accurate determination may be used including using artificial neural networks as will be described later. This may for example compensate or take into account that there are more pauses in speech than true inspiration/ breathing in events which could lead to errors, for example, in estimates of the respiratory rate.

The speech processor 103 is arranged to adapt the speech processing in response to the breathing waveform signal. Thus, rather than merely perform a predetermined speech processing based on nominal or expected properties, the speech processing apparatus of FIG. 1 is arranged to adapt this speech processing to reflect the current breathing of the speaker.

The approach reflects the Inventor's realization that the breathing of a speaker impacts the speaking and that not only may it be possible to determine time varying properties resulting from the breathing from the captured audio but that these time varying properties can further be used to adapt speech processing of the same audio signal to provide improved performance, and in particular performance that may better adapt to different scenarios and user behavior.
The specific speech processing and adaptation performed may depend on the individual embodiment.

However, the approach may in many embodiments be used to adapt the operation to reflect the different breathing patterns that a person may exhibit e.g. due to performing different activities. For example, when a person is exercising, the breathing may become strained resulting in a very disrupted and slowed speech. The speech processing apparatus of FIG. 1 may automatically adapt to be optimized for slow speech with longer silent intervals.

The approach may provide substantially improved speech processing in many scenarios, and may for example in particular provide advantageous operation for speakers engaging in strenuous activities, such as exercising, or have breathing or speaker difficulties.

The approach may be particularly advantageous for automatic speech recognition, e.g. providing a speech interface. For example, the speech interface of a personal assistant makes it possible to control media, navigation features, sport tracking, and various other information services during the exercise. However, typically the speech recognition is optimized, and possibly personalized, for normal speech at rest. During, and right after, a rigorous exercise, the need for oxygen is significantly increased resulting in a modified breathing which impacts the speech. This in turn increases the word-error-rate (WUR) and therefore the usability and user experience provided by the speech interface. The speech processing apparatus may detect a respiratory/ breathing pattern of the user and adapt the speech recognition to take the changed speech properties into account.

The speech recognition algorithms have been optimized for a population of users. The voice prompt that starts the interaction is also often optimized for the individual user.

In more detail, when a user is under physical stress, such as during sports or physically demanding work, and need for more respiratory effort, it will tend to impact the speech of the user. In a rigorous exercise, for example, during interval training, the speaking is severely affected. E.g. typically, the user may need to inhale after every 1-3 words or may often swallow word endings. The condition of shortness of breath is known as dyspnea and speech under such conditions will in the following be referred to as dyspneic speech. Dyspneic speech patterns start to emerge already at a light physical stress, although, human listeners generally subconsciously adapt to this and do not experience a problem in comprehending such speech.

However automated speech recognition algorithms that have been trained using speech from people at rest have serious difficulties in accurately understanding dyspneic speech, and indeed even detecting predetermined voice prompts or trigger terms may be difficult to accurately detect. During the voice commands and conversation with an interface based on automatic speech recognition, the increased breathing rate, rapid and audible inspiration/ breathing in, and swallowing of word endings may significantly reduce the performance. This may make the speech interface difficult and frustrating to use.

In the approach of the speech processing apparatus of FIG. 1, such conditions may not only be detected but the system may automatically adapt the speech processing to be suited for the current conditions.

As a low complexity example, the speech processor 103 may be arranged to select between a plurality of different speech processing algorithms/ processes. Each of these may have been optimized for a given breathing scenario. For example, one process may have been optimized/ trained for a resting breathing pattern. Another may have been optimized/ trained for a more strained but still controlled breathing pattern. Yet another may have been optimized/ trained for a maximally distressed breathing pattern. Based on the breathing waveform signal, the signal processor 103 may select the speech processing algorithm/ process that most closely match the current breathing pattern as indicated by the breathing waveform signal, and then apply this processing to the received audio signal.

Thus, in some embodiments, the speech processor 103 may be arranged to switch between different speech processing algorithms/ functions depending on the breathing waveform signal. The speech processor 103 may analyze the breathing waveform signal to determine a parameter value, such as a breathing rate. Each processing algorithm/ function may be associated with a range of breathing rates and the speech processor 103 may select the algorithm that includes the rate determined from the breathing waveform signal and apply this to the audio signal.

The individual algorithms/ functions that can be selected between may in some embodiments include approaches that e.g. use substantially the same signal processing but with parameters that have been optimized for the given conditions indicted by the breathing waveform signal. For example, the same speech processing may be used but with operating parameters being different for different breathing rates. The operating parameters may for example have been determined by training or individual manual optimization based on tests using captured audio for people for which e.g. breathing properties have been measured by other means.

In some embodiments, the individual algorithms/ functions that can be selected between may include approaches that are fundamentally different and which for example use completely different approaches and principles. For example, a different speech recognition approach may be used for a person at rest breathing, and thus speaking fast and continuously, and for a person at extreme distressed breathing being able to utter mainly individual words interrupted by substantial breathing noise.

As an example, in many embodiments, the speech processor 103 may be arranged to determine a timing property for inspiration/ breathing in intervals from the breathing waveform signal.

Breathing includes a series of alternating inspirations (breathing in air to the lungs) and exhalations (breathing out air from the lungs) and the speech processor 103 may be arranged to evaluate the breathing waveform signal to determine a timing property for the intervals in which the speaker is inspiring/ breathing in. Specifically, the speech processor 103 may be arranged to evaluate the audio signal/ breathing waveform signal to determine a frequency of inspiration/ breathing in intervals, a duration of inspiration/ breathing in intervals, and/or a timing of when these intervals start and/or stop. Such parameters may for example be determined by a peak picking algorithm that locates the local minima and maxima in the breathing waveform signal, which corresponds to the start of the inhalation (breathing in) and exhalation (breathing out) phases. The breathing rate can be determined from the time between two successive in- or exhalations.

In some embodiments, the speech processor 103 may for example select between different algorithms or adapt parameters of a speech processing depending on such timing indicates. For example, if a duration of inspiration/ breathing in increases (e.g. relative to exhaling/ breathing out), it may indicate that the person is taking deep breaths which may reflect a different speech pattern than during normal breathing.

In some embodiments, however, the speech processor 103 may specifically be arranged to modify the speech processing for the inspiration/ breathing in time intervals. In particular, the speech processor 103 may in many embodiments be arranged to inhibit or stop the speech processing during inspiration/ breathing in time intervals. For example, speech processing in the form of speech recognition may simply ignore all the inspiration/ breathing in time intervals and only be applied to the non-inspiration/ breathing in time intervals.

The speech processor 103 may be arranged to determine inspiration/ breathing in time segments of the audio signal. These time segments may thus reflect time intervals of the audio signal during which it is estimated that the speaker is breathing in. The speech processor 103 may in some embodiments be arranged to attenuate the audio signal during the inspiration/ breathing in time segments. For example, a speech enhancement algorithm that is arranged to reduce noise by emphasizing the speech component of the audio signal may during the inspiration/ breathing in time intervals attenuate the audio signal including in many embodiments fully attenuate the signal.

Such approaches may tend to provide substantially improved performance and may allow the speech processing to adapt and specifically to be applied to parts of the audio signal where speech is present while allowing a different approach, and specifically attenuation, of parts of the audio signal where speech is unlikely to be present. The approaches may for example allow the breathing sound to be substantially reduced by eliminating heavy breathing sounds during the inspiration/ breathing in phase of the breathing wave signal. This may substantially improve the perceived speech clarity and may accordingly provide perceived speech. In some embodiments, at may allow for the part of the speech data that occurs during inspiration/ breathing in (estimated from the breathing wave) to be removed before the automatic speech recognition thereby facilitating this and reducing the risk of false detections of words. In a speech encoding embodiment, it may increase e.g. the coding efficiency as no speech encoding may be performed during the inspiration/ breathing in time intervals. For example, an indication of a silent or non-speech time interval may simply be inserted in the encoding data stream to indicate that no speech data is provided for this interval.

The speech processing apparatus of FIG. 1 uses a specific segmented approach to generate the breathing waveform signal on the basis of the input audio signal. The input 101 is coupled to a segmenter 105 which is arranged to generate segments of the audio signal. The segmenter 105 may specifically be arranged to periodically generate segments. However, the segments are generated to have a duration that exceeds the duration between segments and thus at least partially overlapping segments are generated.

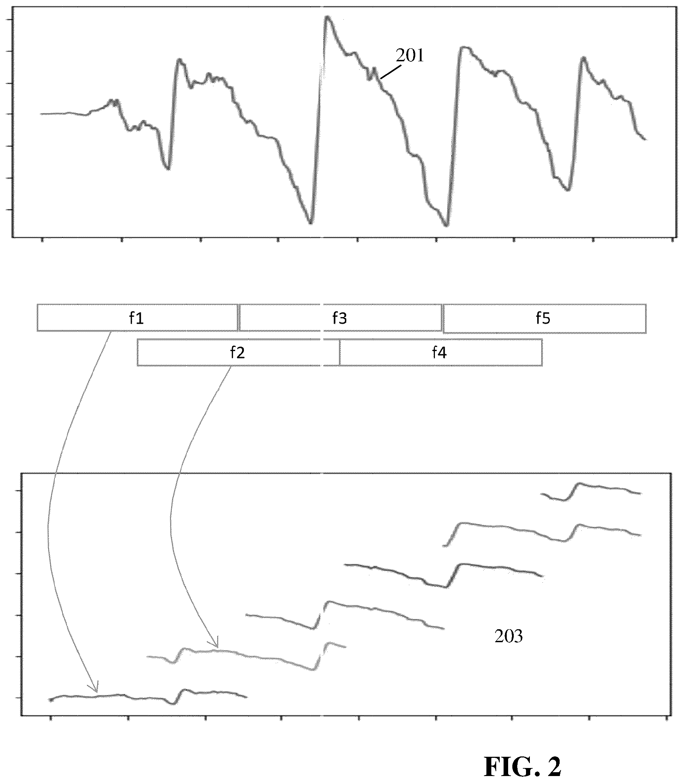

For example, as illustrated in FIG. 2, an audio signal 201 may be segmented into overlapping segments 203 with each segment corresponding to the audio signal in a time interval f1-f5. Each segment has a given duration, i.e. each segment has a segment duration. The segment duration is a duration of a time interval of the audio signal that is represented by the segment. Segments are repeatedly generated to represent the audio signal over a time interval (typically much) larger than the segment durations. The intersegment duration, which is the duration of a time interval between consecutive segments, is smaller than the segment duration so that the segments are overlapping. Thus, at least some parts/ time intervals of the audio signal (specifically some samples) are included in two (or possibly in some situations ever more than two) segments. The intersegment duration may be determined as the time between e.g. start times and/or end times of consecutive segments, or indeed of any other matching relative time in consecutive segments. Typically, the intersegment duration may be determined as the time/ duration between the (time) midpoints of consecutive segments (which may be taken as the nearest sample instant or e.g. a time between sample instants if an even number of samples is contained in the segment).

Typically, segments are generated periodically and thus the intersegment duration is constant for at least a plurality of segments (say for no less than five, ten or more segments). Similarly, typically, the segment duration is also constant for at least a plurality of segments (say for no less than five, ten or more segments). However, it will be appreciated that in some embodiments, the intersegment duration and/or the segment duration may be variable and that specifically the speech processing apparatus may in some embodiments be arranged to adapt one or both of the these values.

In many embodiments, there may be a fixed relationship/ ratio between the segment duration and the intersegment duration. In many embodiments, the ratio may be an integer ratio. For example, in the approach illustrated in FIG. 2, the segment duration is twice the intersegment duration. This leads to a scenario where there is a 50% overlap between two consecutive segments and where each part/ sample of the audio signal is included in two segments.

The overlapping segments of the audio signal are fed to a first generator 107 which is arranged to generate a fragment of breathing waveform signal for each segment of the audio signal. The first generator 107 is arranged to process each segment individually and to generate a fragment of the breathing waveform signal from the individual segments. The first generator 107 may accordingly perform a segment based processing where each segment of the audio signal is individually processed to generate one fragment of the breathing waveform signal. Thus, for each segment of the audio signal, a fragment of the breathing waveform signal may be generated from that segment of the audio signal.

In some embodiments, each segment of the audio signal may be processed to generate a fragment of the breathing waveform signal. In some embodiments, only the audio signal in one segment may be considered/processed when generating one fragment of the breathing waveform signal. In many embodiments, each fragment of the breathing waveform signal may comprise no less than 2, 5, 10, 20, or even 50 samples.

It would be possible for each fragment to be generated to have a duration matching that of the intersegment duration. For example, the fragment could be generated to cover a time interval having a duration identical to the intersegment duration and being centered on the midpoint of the segment time interval. This may result in subsequent fragments being non-overlapping but abutting so that a continuous breathing waveform signal is generated. However, in the approach of the apparatus of FIG. 2, the fragments have a duration that exceeds the segment duration, and the fragments may be overlapping. The fragments may still be timed to be centered on each of the segment time intervals, i.e. the midpoints may coincide. In many embodiments, each fragment may be generated to cover a time interval that matches the segment time interval for the segment on the basis of which the fragment is generated. Thus, in many embodiments, the fragment duration may be the same as the segment duration, and indeed in many embodiments, the time interval for which a fragment is generated is the same as the time interval of the segment used to generate the fragment. It is also for completeness noted that it could even be possible, although not the case for the apparatus of FIG. 2, for the fragment duration to be even be shorter than the intersegment duration. This may lead to a breathing waveform signal with gaps but that may be acceptable in some situations. In particular, the speech processing circuit 103 may be arranged to e.g. determine parameters (e.g. a word rate) of the breathing waveform signal based only on the fragments and then apply these to the entire segment.

The terms fragment and segment may be used interchangeably.

As an example, the first generator 107 may include a model for human breathing which generates a breathing waveform signal based on a number of model parameters. Some of the model parameters may be set to reflect the specific speaker e.g. based on manually provided data or data previously determined e.g. from the audio signal (or from previous sessions). Such model parameters may for example reflect whether the speaker is female or male, is a child, adult, or senior person etc. Model parameters may also reflect for example a normal speaking pitch, an average word rate etc.

The model may be arranged to generate a breathing waveform signal fragment which has a predetermined size, i.e. specifically it may generate a fragment that has a given duration every time the model is evaluated. The model may be evaluated for each segment of the audio signal based on the model parameters. Further, prior to evaluating the model, one or more parameters may be determined specifically for the current segment based on evaluating the segment itself. For example, a current pitch rate, word length, speech activity level etc. may be determined and used as an input for the model generating the breathing waveform signal.

In one implementation the model may be based on the use of a speech activity detection (SAD) algorithm to find pauses in each speech input segment. SAD gives, for each time sample of audio data, an indication of whether the sample data is speech or non-speech audio data. Based on SAD signal, we may select a sequence of speech pauses that are, for example, longer than 200ms. Next, assuming that pauses represent the inhale events in breathing, the breathing waveform fragment is formed such that each end of a pause is selected as a local minimum point, and each end of a pause is a local maximum. All intermediate points can be then formed by means of linear (or polynomial) interpolation to produce a "sawtooth" wave pattern corresponding to the breathing waveform fragment.

The first generator 107 is coupled to a second generator 107 which is arranged to generate the breathing waveform signal by combining the fragments of the breathing waveform signal. In embodiments where each fragment has a duration corresponding to the segment time interval for which the fragment is generated, the combination may simply be by concatenating the fragments into a signal of extended duration. As will be described in more detail later, for overlapping fragments, the combination may for example include a weighted summation of signal levels/ samples of the breathing waveform signal generated for the same time instant.

The breathing waveform signal is together with the audio signal fed to the speech processing circuit 103 which proceeds to perform the speech processing based on the generated breathing waveform signal.

In many embodiments, the determination of the fragments of the breathing waveform signal from the segments may be performed by a suitably trained artificial neural network.

In many embodiments, the first generator 107 comprises a trained artificial neural network having input nodes for receiving samples of a segment of the audio signal and output nodes arranged to provide samples of a fragment of the breathing waveform signal for the segment of the audio signal.

In many embodiments, the determiner 105 may comprise a trained artificial network which is arranged to determine samples of the breathing waveform signal based on samples of the audio signal. The artificial neural network may comprise input nodes that receive samples of the audio signal and output nodes that generate samples of the breathing waveform signal. The artificial neural network may for example have been trained using speech data and sensor data representing of lung air volume measurements during speech.

In the example, the artificial neural network may have input nodes that receive the samples of one segment of the audio signal, and the number of input nodes may match the number of samples in the signal. The artificial neural network may then process the segment to generate output samples which are samples of a fragment of the breathing waveform signal. The number of output nodes may typically be the same as the number of samples of the fragment with each output node providing a sample of the fragment of the breathing waveform signal. The artificial neural network may thus be executed on a segment by segment basis to generate fragments of the breathing waveform signal.

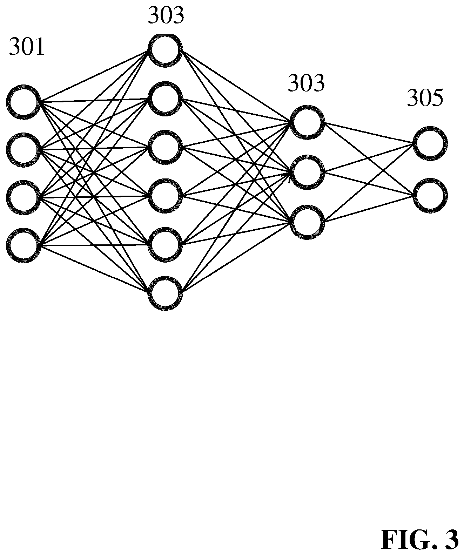

An artificial neural network as used in the described functions may be a network of nodes arranged in layers and with each node holding a node value. FIG. 3 illustrates an example of a section of an artificial neural network.

The node value for a given node may be calculated to include contributions from some or often all nodes of a previous layer of the artificial neural network. Specifically, the node value for a node may be calculated as a weighted summation of the node values of all the nodes output of the previous layer. Typically, a bias may be added and the result may be subjected to an activation function. The activation function provides an essential part of each neuron by typically providing a non-linearity. Such non-linearities and activation functions provides a significant effect in the learning and adaptation process of the neural network. Thus, the node value is generated as a function of the node values of the previous layer.

The artificial neural network may specifically comprise an input layer 301 comprising a plurality of nodes receiving the input data values for the artificial neural network. Thus, the node values for nodes of the input layer may typically directly be the input data values to the artificial neural network and thus may not be calculated from other node values.

The artificial neural network may further comprise none, one, or more hidden layers 303 or processing layers. For each of such layers, the node values are typically generated as a function of the node values of the nodes of the previous layer, and specifically a weighted combination and added bias followed by an activation function (such as a sigmoid, ReLU, or Tanh function may be applied). Specifically, as shown in FIG. 3, each node, which may also be referred to as a neuron, may receive input values (from nodes of a previous layer) and therefrom calculate a node value as a function of these values. Often, this includes first generating a value as a linear combination of the input values with each of these weighted by a weight:

$$k = \sum_n w_n x_n$$

where w refers to weights, x refers to the nodes of the previous layer and n is an index referring to the different nodes of the previous layer.

An activation function may then by applied to the resulting combination. For example, the node value 1 may be determined as:

$$l = f(k)$$

where the function may for example be a Rectified Linear Unit function as described in Xavier Glorot, Antoine Bordes, Yoshua Bengio Proceedings of the Fourteenth International Conference on Artificial Intelligence and Statistics, PMLR 15:315-323, 2011):

$$f(k) = ReLU(k) = \max(0, k)$$

Other often used functions include a sigmoid function or a tanh function. In many embodiments, the node output or value may be calculated using a plurality of functions. For example, both a ReLU and Sigmoid function may be combined using an activation function such as:

$$f(k) = ReLU(k) + \sigma(k)$$

Such operations may be performed by each node of the artificial neural network (except for typically the input nodes).

The artificial neural network further comprises an output layer 305 which provides the output from the artificial neural network, i.e. the output data of the artificial neural network is the node values of the output layer. As for the hidden/ processing layers, the output node values are generated by a function of the node values of the previous layer. However, in contrast to the hidden/ processing layers where the node values are typically not accessible or used further, the node values of the output layer are accessible and provide the result of the operation of the artificial neural network.

A number of different networks structures and toolboxes for artificial neural network have been developed and in many embodiments the artificial neural network may be based on adapting and customizing such a network. An example of a network architecture that may be suitable for the applications mentioned above are Long short-term memory (LSTM)[ by Sepp Hochsreiter which is described in Hochreiter, Sepp, and Jürgen Schmidhuber. "Long short-term memory." Neural computation 9.8 (1997): 1735-1780.

LSTM are an architecture used for classification and regression of time domain signals using recurrent causal or bidirectional evaluation, and has been successfully applied to audio signals. For $f_t = \sigma_g(W_f * x_t + U_f * h_{t-1} + V_f \circ c_{t-1} + b_f)$ where * denotes matrix multiplication, o denotes an Hadamard product, x is the input vector, $h_{t-1}$ denotes the output vector of the previous time step, W, V, U are the network weights, while b is a bias vector, $\sigma_g$ is typically a sigmoid function or other compressive non-linear function and $c_{t-1}$ is the previous state vector and the output $f_t$ is the activation vector corresponding to the forget gate of the LSTM network, which will subsequently influence the current state vector $c_t$.

In theory, classic (or "vanilla") artificial neural networks can keep track of arbitrary long-term dependencies in the input sequences. The problem with vanilla artificial neural networks is computational (or practical) in nature: when training a vanilla artificial neural network using back-propagation, the long-term gradients which are back-propagated can "vanish" (that is, they can tend to zero) or "explode" (that is, they can tend to infinity), because of the computations involved in the process, which use finite-precision numbers. artificial neural networks using LSTM units partially solve the vanishing gradient problem, because LSTM units allow gradients to also flow unchanged. However, LSTM networks can still suffer from the exploding gradient problem.

An artificial neural network may in some cases further be arranged to include additional contributions that allow the artificial neural network to be dynamically adapted or customized for a specific desired property or characteristics of the generated output. For example, a set of values may be provided to adapt the artificial neural network. These values may be included by providing a contribution to some nodes of the artificial neural network. These nodes may be specifically input nodes but may typically be nodes of a hidden or processing layer. Such adaptation values may for example be weighted and added as a contribution to the weighted summation/ correlation value for a given node.

The above description relates to a neural network approach that may be suitable for many embodiments and implementations. However, it will be appreciated that many other types and structures of neural network may be used. Indeed, many different approaches for generating a neural network have been, and are being, developed including neural networks using complex structures and processes that differ from the ones described above. The approach is not limited to any specific neural network approach and any suitable approach may be used without detracting from the invention.

Artificial neural networks are adapted to specific purposes by a training process which is used to adapt/ tune/ modify the weights and other parameters (e.g. bias) of the artificial neural network. It will be appreciated that many different training processes and algorithms are known for training artificial neural networks. Typically, training is based on large training sets where a large number of examples of input data are provided to the network. Further, the output of the artificial neural network is typically (directly or indirectly) compared to an expected or ideal result. A cost function may be generated to reflect the desired outcome of the training process. In a typical scenario known as supervised learning, the cost function often represents the distance between the prediction and the ground truth for a particular input data. Based on the cost function, the weights may be changed and by reiterating the process for the modified weights, the artificial neural network may be adapted towards a state for which the cost function is minimized.

In more detail, during a training step the neural network may have two different flows of information from input to output (forward pass) and from output to input (backward pass). In the forward pass, the data is processed by the neural network as described above while in the backward pass the weights are updated to minimize the cost function. Typically, such a backward propagation follows the gradient direction of the cost function landscape. In other words, by comparing the predicted output with the ground truth for a batch of data input, one can estimate the direction in which the cost function is minimized and propagate backward, by updating the weights accordingly. Other approaches known for training artificial neural networks include for example Levenberg-Marquardt algorithm, the conjugate gradient method, and the Newton method etc.

In the present case, training may specifically include a training set comprising a potentially large number of pairs of a captured audio signals and measured breathing waveform signals. The measured breathing waveform signal may be generated from a sensor signal of a sensor arranged to measure a property dependent on the lung air volume. The training of the artificial neural network may thus be performed using a training set comprising linked audio/ speech data/ signals and sensor data/ signals representing of lung air volume measurements during the speech.

In some embodiments, training data may be audio signals in time segments corresponding to the processing time intervals of the artificial neural networks being trained, e.g. the number of samples in a training audio signal may correspond to a number of samples corresponding to the input nodes of the artificial neural network(s) being trained. Each training example may thus correspond to one operation of the artificial neural network(s) being trained. Usually, however, a batch of training samples is considered for each step to speed up the training process. Furthermore, many upgrades to gradient descent are possible also to speed up convergence or avoid local minima in the cost function landscape.

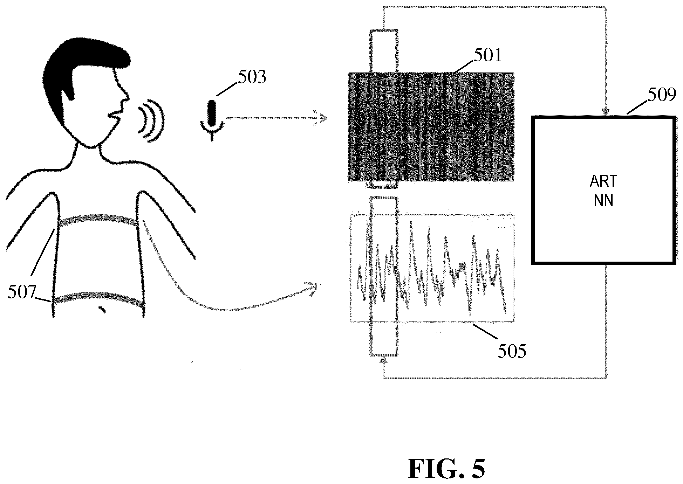

FIG. 5 illustrates an example of how training data may be generated by dedicated tests. A speech audio signal 501 may be captured by a microphone 503 during a time interval in which a person is speaking. The resulting captured audio signal may be fed to the artificial neural network 505 as input data (suitable processing such as amplification, digitization, filtering may be performed prior to generating the test audio signal being fed to the artificial neural network. Further, a breathing waveform signal 507 is determined as a sensor signal from a suitable lung volume sensor 509 that is e.g. positioned on the user. For example, the sensor 509 may be a respiratory inductive plethysmography (rip) sensor or a nasal canula flow rate sensor.

A large number of such measurements may be made to generate a large number of pairs of training audio signals and breathing waveform signal. These signals may then be applied and used to train the artificial neural network with a cost function being determined as the difference between the breathing waveform signal generated by the artificial neural network for the training audio signal and the measured training breathing waveform signal. The artificial neural network may then be adapted based on such a cost function as known in the art. For example, a cost value for each training audio signal and/or for the combined set of training downmix audio signals (e.g. an average cost value for the training sets is determined) may be determined. Typically, the cost function will include at least one component that reflects how close a generated signal is to a reference signal, i.e. a so-called reconstruction error. In some embodiments, the cost function will include at least one component that reflects how close a generated signal is to a reference signal from a perceptual point of view. The reference signal may in the example of FIG. 5 specifically be the measured breathing waveform signal.

The described approach may provide particularly advantageous performance in many scenarios and applications. It may typically allow a much improved speech processing based on a more accurate breathing waveform signal estimated from the audio signal. The segment based processing may be highly advantageous as it allows an efficient and practical processing and implementation. However, segmented operation is typically also disadvantageous and associated with imperfections and issues. In particular, it tends to provide segment edge effects and the Inventor has in particular realized that determining a breathing waveform signal from an audio signal by segmented processing may result in many edge effects. The Inventor has further realized that improved performance may be achieved in many scenarios by extending the segment duration and by generating the fragments based on speech information and data/ segments that extend beyond the interval between segments, i.e. based on overlapping segments.

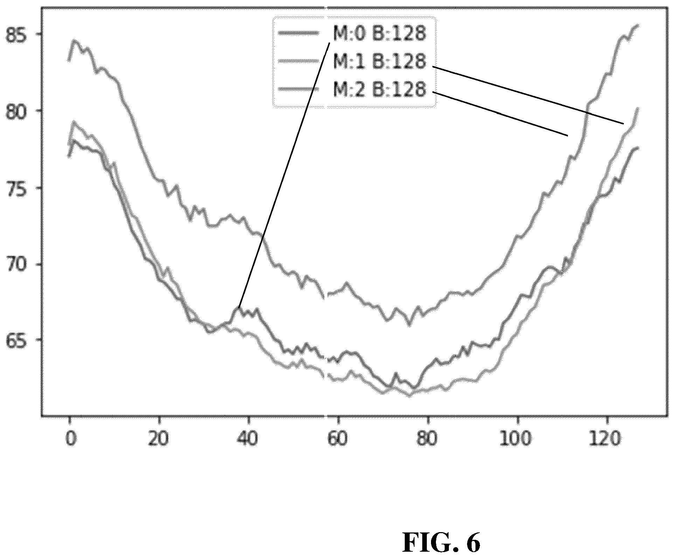

Fig. 6 illustrates an example of the distribution of reconstruction errors within a 128 sample breathing waveform signal reconstruction window, accumulated over thousands of frames. The errors are clearly smallest in the middle of the frame and increase towards the beginning and the end of the segment. In the described approach of the apparatus of FIG. 1, the reconstruction may be focussed on the center area with lower area and/or may consider multiple segments/ fragments for reconstruction towards the edges.

In many embodiments, the segment duration may exceed the intersegment duration by a substantial amount, and in many embodiments by no less than 25 %, 50%, 75%, or 100%. In particular, in the described examples of e.g. FIG. 2, the segment duration is twice the intersegment duration (100% longer) resulting in each sample or time instant of the audio signal being included in two segments and allowing a particularly advantageous operation highly suitable for efficient implementation.

In many embodiments, a segment may include a part of the audio signal which is also included in a previous segment, and may also include another part of the audio signal which is included in subsequent segment of the audio signal. For example, in FIG. 2, segment f2 includes a first part that is also included in the previous segment f1 as well as a second part that is also included in the subsequent segment f3. Indeed, in the example, the first half of segment f2 is also included in segment f1 and the latter half of segment f2 is also included in segment f3.

Such overlapping segments and inclusion of at least some parts of the audio signal in multiple segments may provide a particularly advantageous performance in many embodiments. It may substantially reduce the segment edge effects of each fragment while allowing the fragments to continue on from each other without any gaps, i.e. it may in particular allow a continuous breathing waveform signal to be generated while mitigating edge effects for the breathing waveform signal.

In many embodiments, the fragments may be generated to be at least partially overlapping. The combination performed by the second generator 107 may in some cases be a simple combination such as concatenating sequential fragments into a breathing waveform signal, possibly including selection combining for overlapping parts (e.g. selecting the breathing waveform signal sample that is closest to a midpoint of the sample).

However, in many embodiments, the combination may be a weighted combination where a sample for a given time instant is generated as a weighted combination of the samples for that time instant of the different fragments. In particular, for two fragments overlapping, the sample of the breathing waveform signal for a given time instant may be generated by weighting the two samples of the two fragments for that time instant and adding them together.

The weight factors for each sample may be determined as a function of the time difference between the time instant of the sample and the midpoint of the fragment, and specifically as a monotonically decreasing function of the difference.

In many embodiments, the weight values may be determined to reflect a fragment window function. For example, in some embodiments, each sample of a fragment may be multiplied by a weight factor that is a function of the sample time within the fragment. The fragment window function may for example be a squared sine window function, a Hanning window function etc.

In most embodiments, the weights may be determined such that the total/ combined/ accumulated weight factors for a given time instant (considering all fragments contributing to that time instant) is constant. For example, in many embodiments, the weight factors may add up to one for all time instants. Such an approach may typically be achieved by selecting an appropriate window for the given fragment size and overlap. For example, for the specific examples previously provided, a squared sine window function applied to the fragments will inherently result in a constant combined weight factor being applied to the fragments.

After scaling by the window function weight factors, the results may simply be added together by the second generator 107.

In many embodiments, the speech processing apparatus is arranged to generate the breathing waveform signal to have a much lower sample rate than the audio signal. Indeed, in many embodiments, the speech processing apparatus may generate the sample rate of the breathing waveform signal to be lower than a sample rate of the audio signal by a factor of no less than 10, 50, or even 100. For example, the sample rate of the audio signal may often be e.g. (no less than) 16kHz, 32 kHz, or 64 kHz whereas the breathing waveform signal has a sample rate of no more than 50 Hz, 100 Hz, 200 Hz, or 500 Hz.

In many embodiments, the first generator 107 and/or the segmenter 105 may be arranged to generate the segments to have a lower sample rate than the audio signal. Thus, in many embodiments, the speech processing apparatus may be arranged to decimate the audio signal by a factor of no less than 10, and often more than 100, prior to the generation of the breathing waveform signal.

Such a decimation may result in substantially facilitated operation and may often allow a substantial reduction in complexity and required resource usage. In particular, the substantially reduced number of samples of each segment for a given time interval may result in facilitated processing e.g. to extract model parameters that can be used to adapt a model for generating the breathing waveform signal. In implementations that are based on using an artificial neural network, the significant reduction of samples in a segment may allow a huge decrease in complexity and resource usage. In particular, the number of input nodes may for a given segment duration be reduced by a factor corresponding to the decimation factor. This may further reduce the number of nodes and computations that are required to execute the artificial neural network operation resulting in a much reduced computational resource.

The approach may reflect the Inventor's realization that the dynamics of the breathing function are much slower than that of audio and speech, and that it can be represented by a much lower sample rate. It further reflects the counterintuitive insight that this does not just allow the generated breathing waveform signal to be decimated but rather that the entire operation can be performed in a decimated domain while still retaining the required information to generate the breathing waveform signal.

In some embodiments, the decimation may be performed as part of the processing generating the breathing waveform signal. In some embodiments, the first generator 107 may be arranged to generate the fragments to have a lower sample rate than the segments of the audio signal. Thus, segments with a higher sample rate may be provided to the first generator 107 which may then directly generate the breathing waveform signal with a much lower sample rate.

For example, the samples of a segment at a higher sample rate may be fed to an artificial neural network, i.e. the artificial neural network may have a number of input nodes that corresponds to the number of samples in the segment. It may then, based on this, generate a fragment of the breathing waveform signal which includes samples at a much lower sample rate. Thus, the artificial neural network may have a number of output nodes that corresponds to the samples (at the lower sample rate) of the fragment. Thus, the artificial neural network may have a lot fewer output nodes than input nodes. Such an approach may allow a computationally efficient operation yet in some cases provide an improved determination of the breathing waveform signal as more high frequency information may be considered.

In many embodiments, the segment samples fed to the first generator 107 may be in the form of time domain samples. However, in some embodiments, the segment samples may be provided in the frequency domain and in particular, the segmenter 107 may apply a frequency transform to generate a frequency representation of the signal. In many embodiments, each segment may accordingly be represented by a set of frequency samples, such as the output of an FFT operation or a (e.g. QMF) filterbank.

In many embodiments, each segment may advantageously be represented by a set of samples that include both frequency and time samples. In particular, each segment may be represented by matrix of time-frequency samples comprising at least samples for two different time intervals and for two different frequency ranges.

For example, an FFT or QMF filter bank may be applied to the input signal at a given block size that is smaller than a full segment. For example, a given segment may be divided into a plurality of N blocks with each block comprising M samples. A frequency transform may be applied to each block resulting in e.g. M frequency bins being generated for each block. The repeated application of the frequency transform results in N samples being generated for each bin, i.e. for each frequency bin, N time domain samples are generated. The resulting samples may be used to represent the segment by an NxM sample matrix with N time domain samples for each of M frequency bins.

Each segment may accordingly in many embodiments represent a matrix of time-frequency samples comprising at least samples for two different time intervals and for two different frequency ranges. For each frequency bin, there may typically be a plurality of sample values for different time instants corresponding to each frequency transform block.

In many embodiments, such a matrix representation of the segment may be fed to e.g. an artificial neural network, i.e. the artificial neural network may comprise input nodes for receiving the samples of a block comprising both frequency and time separated samples.

In many embodiments, the matrix representation may be at a reduced sample rate as previously described. In particular, in many embodiments, the frequency transform may be performed after a decimation has been applied to a time domain representation of the audio signal as previously described.

The representation of a segment by a combined time-frequency set of samples may in many embodiments provide improved determination of the breathing waveform signal and may allow a facilitated and improved implementation, e.g. by allowing a frequency transform with a substantially reduced complexity and resource usage. It has in particular been found to provide improved operation and performance when used with an artificial neural network.

In the following a specific example of determining a breathing waveform signal from an audio signal will be described. The approach includes most of the previously described features and approaches, but it will be appreciated that this does not imply that these features must be applied together but rather they may in different embodiments be applied individually/ separately, and indeed in many embodiments only a subset of these features being performed/ included.

In the example, the speech processing apparatus may predict a fragment of a breathing waveform signal $b(k)$, $k = 0,.., B$, for a segment of audio signal $x(t)$, $t = 0,.., N - 1$, where $t$ and $k$ are time-indices that are typically at a different sampling rate, the length of the segment is $N$ samples, and the length of the generated fragment is $B$ samples.

The operation may be performed in frames/ segments of $N$ samples (i.e. with a segment duration of N samples) in steps of $S$ samples (i.e. with an intersegment duration of of S samples). Typically $S = N/2$. We use the subtitle $\alpha$ and $\beta$ to denote the signals and frame sizes in the audio and VRB signals, respectively.

A $p$th audio vector is then given by $\boldsymbol{x}_p = (x(\tau), \tau = pS_\alpha, \ldots , pS_\alpha + N_\alpha - 1)$. The estimation model may produce a breathing waveform signal segment $\boldsymbol{b}_p$ of $N_\beta$ samples. For the reconstruction, we define a window function $w_p(k)$ which is non-zero in $k = [pS_\beta, pS_\beta + N_\beta - 1]$ and zero elsewhere. The window function has the property that

$$w(k) = \sum_{p=-\infty}^{\infty} w_p(k) = 1.0 \; \forall \, k$$

A typical example is a squared sine window

$$w_p(k) = \begin{cases} \sin^2\left(\dfrac{\pi\left(k - pS_\beta\right)}{N_\beta}\right), & \text{if } k \in [pS_\beta, pS_\beta + N_\beta - 1] \\ 0, & \text{elsewhere} \end{cases}$$

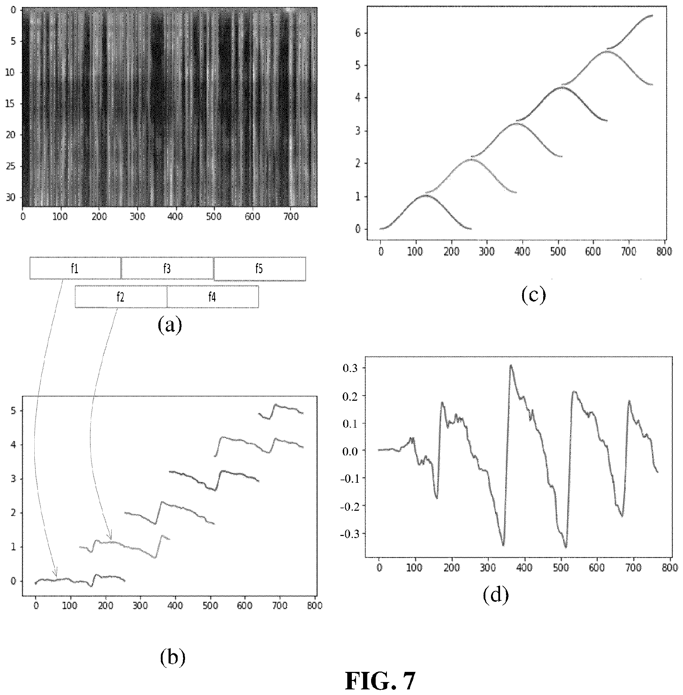

but in other embodiments, other window functions that e.g. meet the property above may be used. In some embodiments, the shape of the window function can be optimized based on the shape of the frame reconstruction error function shown in FIG. 7.

The breathing waveform signal may then be generated as:

$$b(k) = \sum_{p=-\infty}^{\infty} w_p(k) \, b_p(k - pS_\beta)$$

In a practical implementation $p$ has some limited support, say, $p = 0, \ldots, P - 1$ and therefore the reconstruction of the first and last $S_\beta$ samples of the breathing waveform signal is not complete but tapered by the tails of the window function. In one embodiment the reconstruction window in the beginning and the end of the processed signal may be modified so that the tapering can be avoided.

The approach is illustrated in FIG. 7 where drawing (a) discloses an example of a frequency and time matrix of samples, drawing (b) illustrates the generated fragments of the breathing waveform signal, drawing (c) illustrates the fragment window functions, and drawing (d) illustrates the resulting combined breathing waveform signal.

In many embodiments, the speech processing apparatus may comprise an adapter 113 which arranged to adapt a timing property of the segmentation, and specifically to adapt the intersegment duration and/ or the segment duration. Thus, in many embodiments, the adapter 113 may dynamically change the intersegment duration and/or the segment duration to reflect the current conditions.

The adapter 213 may specifically be arranged to adapt the timing parameter in response to at least one of a property of the audio signal and a property of the breathing waveform signal. Thus, in some embodiments, the adapter 213 may directly be arranged to evaluate the audio signal to extract a property such as e.g. a pitch or word rate and proceed to change the intersegment duration and/or the segment duration in response to this, e.g. by making both the intersegment duration and the segment duration shorter for an increased word rate. In some embodiments, the adapter 213 may be arranged to evaluate the breathing waveform signal to extract a property such as e.g. a breathing rate and proceed to change the intersegment duration and/or the segment duration in response to this, e.g. by making both the intersegment duration and the segment duration shorter for an increased breathing rate.

In some embodiments, the adapter 213 may be arranged to adapt the intersegment duration in response to a property of the audio signal. For example, if the level of background noise is high, the model uses longer intersegment duration in the reconstruction of the breathing waveform. In another embodiment, we may use a speech classification method to detect that the talker is speaking softly, normally, or shouting loudly, and the intersegment duration may be varied accordingly, such as selecting a shorter duration for louder (e.g. shouting) speech.

In some embodiments, the adapter 213 may be arranged to adapt the intersegment duration in response to a property of the breathing waveform signal. For example, if the respiratory rate computed from the breathing waveform is low, the intersegment duration may be increased to allow an increased segment duration in order to accommodate more breathing events in each segment.

In some embodiments, the adapter 213 may be arranged to adapt the segment duration in response to a property of the audio signal. For example, if the level of background noise is high, the model may use longer segment durations in the reconstruction of the breathing waveform.

In some embodiments, the adapter 213 may be arranged to adapt the segment duration in response to a property of the breathing waveform signal. For example, when the average respiratory rate calculated from the breathing waveform signal is low, the segment length is increased to accommodate more breathing events.

A typical (initial) segment duration $N$ is four seconds and the intersegment may (initially) be set to have a duration of 2 seconds.

As described previously, the approach may provide improved performance for a range of speech processing applications.

In particular for automated speech recognition, the approach may provide substantially improved performance by the process being adapted to the current properties of the speaker.

For example, as previously mentioned, the speech processor 103 may be arranged to determine inspiration/ breathing in time segments of the audio signal corresponding to times when the speaker is breathing in and accordingly is not speaking. The speech processor 103 may then be arranged to exclude these the inspiration/ breathing in time segments from the speech recognition processing being applied to the audio signal. Thus, times for which the breathing waveform signal may indicate that speech is highly unlikely can be excluded from speech recognition thereby reducing the risk of erroneously detecting words when no speech is present. It may also improve accuracy detection for other times as it can be estimated when words may be spoken.

As another example, the breathing waveform signal may be used to adapt speech recognition by e.g. estimating the word rate from the level of exertion and distress in the breathing pattern as estimated from the breathing waveform signal.

In some embodiments, the speech processor 103 may be arranged to (first) perform speech recognition operation without consideration of the breathing waveform signal or any parameters derived therefrom. However, rather than merely providing an estimated term or sentence, the speech recognition may generate a plurality of different candidates for estimates of what may have been spoken. The speech processor 103 may then be arranged to select between the different candidates based on the breathing waveform signal. For example, a waveform of activity for the estimated sentences may be compared to the breathing waveform signal and the selection may be based on how closely these match. For example, sentences that are aligned with the inspiration/ breathing in intervals may be selected over sentences that are not aligned with the inspiration/ breathing in intervals (and which e.g. includes speech during estimated inspiration/ breathing in intervals).

As another example, selection between candidates may be based on a distress level of the breathing. For example, when a user is relaxed, the word rate of speech is typically much higher than when the user is highly distressed and experiencing dyspnea (e.g. due to strenuous physical exercise). Thus, the speech processor 103 may be arranged to select between candidates based on the word rate of these. For example, if the breathing waveform signal indicates that the speaker is relaxed, the candidate with the highest word rate may be selected and if the breathing waveform signal indicates that the speaker is experiencing dyspnea, it may proceed to select the candidate with the lowest word rate.

Of course, in many scenarios, the breathing waveform signal may only be a factor in selecting between candidates and other parameters may also be considered. For example, the speech recognition may in addition to candidate terms also estimate a confidence or reliability value for each candidate/ estimate, and the selection may further take such a confidence level into account.

A particular advantage of such approaches is that improved detection can be achieved by further considering the breathing properties of the speaker, yet a conventional speech recognition module can be used. Thus, a post processing of results from an existing speech recognition algorithm can be used to provide improved performance while allowing backwards compatibility and allowing existing recognition algorithms to be used.

In many embodiments, the speech processing may be a speech encoding where captured speech e.g. is encoded for efficient transmission or distribution over a suitable communication channel. As previously mentioned, a more efficient encoding may typically be achieved simply by not encoding any signal during the inspiration/ breathing in time segments, or by assigning fewer bits to the signal in the entropy coding during inspiration/ breathing in periods.

As another example, the information about the respiratory wave can be used to control voice manipulation, for example, to conceal the talkers state of being exhausted. For example, the system may detect the state of respiratory difficulty by detecting an increase respiratory rate of the talker. Next, a speech synthesizer, such as a Wavenet model, can be used to resynthesize a new speech signal resembling the voice of the same talker but with a different respiratory wave pattern corresponding to a talker with a lower respiratory rate.

In some embodiments, the speech processing may be a speech enhancement. Such a speech enhancement may for example be used to provide a clearer speech signal with e.g. other audio sources and noise in the audio signal being reduced. For example, as previously described, the audio signal may be attenuated during inspiration/ breathing in time segments. As another example, different frequencies may be attenuated depending on the breathing waveform signal thereby specifically attenuating frequencies that tend to be more predominant for some breathing noises. As another example, the breathing waveform signal may indicate transitions or phases in the breathing cycle which tend to be associated with specific sounds, and the speech processing may be arranged to generate corresponding signals and apply them in antiphase to provide an audio cancelling effect for such sounds.

In many embodiments, the speech processor 103 may be arranged to evaluate the breathing waveform signal to determine one or more parameters of the breathing of the speaker. It may further be arranged to adapt the speech processing based on the determined parameter value.

For example, in many embodiments, the speech processor 103 is arranged to determine a breathing rate estimate from the breathing waveform signal and to adapt the speech processing in dependence on the breathing rate.

As breathing is inherently a repeating/ periodic process, the breathing waveform signal will also be a periodic signal (or at least have a strong periodic component), and the breathing rate may be determined by determining the repetition rate/ duration of the periodic components of the breathing waveform signal. For example, the breathing waveform signal may be correlated with itself and the duration between correlation peaks may be determined and used as a measure of the breathing rate. It will be appreciated that a number of different techniques and algorithms are known for detecting periodic components in signals, and that any approach may be used without detracting from the invention.

The breathing rate may be indicative of a number of parameters that can affect the speech of a person. For example, the breathing rate may be a strong indicator of how relaxed or distressed/ exhausted the speaker is and as previously described this may affect the speech in different ways including for example the word rate, the amount of breathing noise etc. As previously described, the speech processing may be adapted to reflect these parameters.

The breathing rate may also provide information related to the timing of the inspiration/ breathing in time intervals/ segments. In particular, the frequency and time between inspiration/ breathing in time intervals may directly be given by the breathing rate.

As another example, the breathing rate may be used to adapt the speech processing by having a specific speech preprocessing method selected based on the respiratory rate of the talker. For example, a different parameters of a speech activity detection or speech enhancement algorithm is used when the talker has a low respiratory rate than when the respiratory rate is elevated, or high.

In some embodiments, the speech processor 103 is arranged to determine a speech word rate from the breathing waveform signal and to adapt the speech processing in dependence on the speech word rate.

The speech word rate may for example be determined by the output of an automatic speech recognition method.

As described, the word rate of a speaker may vary substantially based on how relaxed or stressed the speaker is. The breathing waveform signal may be used to determine a level of this and thus of the degree of dyspnea that is currently experienced by the speaker. The word rate for the given level of dyspnea may be determined (e.g. as a predetermined value for a given degree of breathing distress). The speech processing may then be performed based on the determined word rate. For example, as previously described, the speech processor 103 may perform speech recognition providing a plurality of possible candidates and the candidate having a word rate most closely matching the word rate determined from the breathing waveform signal may be selected. In some embodiments, the speech recognition may thus provide several candidates for the speech utterance and, based on the expected word rate determined from the breathing waveform signal, the speech processor 103 may in case of high dyspnea select the utterance corresponding to the lowest word rate and with long speech pause durations.

Indeed, many speech recognition systems have difficulties in case of a low word rate and pauses in dyspneic speech. However, in the approach, the parameters of the speech recognition can be adjusted to accommodate to this, or the output of the speech recognition system may be processed to adopt to the condition.

As another example, the word rate may be used to adapt the speech processing by having a specific setting in speech preprocessing or speech coding algorithm that is set based on the word rate. The setting may, for example, in a speech coder, trigger the use of a different quantization vector codebook in the encoder and decoder.

In some embodiments, the speech processor 103 is arranged to determine a breathing sound level during inspiration/ breathing in from the breathing waveform signal and to adapt the speech processing in dependence on the speech breathing sound level during inspiration/ breathing in.

The breathing sound level may for example be determined by calculating the root mean squared amplitude level of the inspiration speech signals (the audio signal during detected inspiration/ breathing in time intervals), optionally weighting can be applied to account for the relative loudness as perceived by the human ear.

For example, in audio recordings the sounds of inhaling can distract the listener from the contents of what is being said or sung. The detected sound level of the sounds of inhaling can in this case be a measure of how much the sounds of inhaling need to be attenuated in order to become inaudible.

In some embodiments, the speech processor 103 may be arranged to take other data into account than just the audio signal (and the breathing waveform signal derived therefrom).

The approach may for example provide a particularly advantageous and synergistic effect for embodiments in which the speech processing is adapted based on a parameter of the breathing waveform signal which may not directly indicate e.g. physical exercise of the person but which could also be due to other issues. For example, it may allow differentiation between dyspnea caused by rigorous exercise and dyspnea caused by medical breathing issues and thus also occurring in a relaxed state.

As a specific example, the speech processor 103 may, based on a detected heart rate, make a prediction of the respiratory rate or word rate and use this estimate to set the parameters of a speech preprocessing or coding algorithm as discussed above. This is based on a consideration that the heart rate and the breathing rate often correlate. This is advantageous to get the best performance of the system from the first utterance of the talker before the model for the estimation of the breathing wave has access to a sufficiently long speech recording needed to be able to give the first estimate. This is also advantageous in cases the talker uses only very short utterances, for example, voice commands to control a music playback application in a wearable audio player.

In some embodiments, the speech processor 103 may comprises a human breathing model which may be used to determine a breathing property for the speaker. Such a breathing model may be adapted based on the received heart rate and/or activity. In some embodiments, the speech processor 103 may estimate a computational model that produces estimates of breathing features from activity features corresponding to the current physical activity and vitals measured using a wearable.

For example, the human breathing model may model specific biophysical processes in the organs of the body, or it may be a functional high-level metabolic model. For example, the Metabolic equivalent (MET) relates to the rate of the body's oxygen uptake for a given activity as a multiple of resting VO 2. Based on a known MET of an activity, the effective lung volume, VO2 and the concentration of oxygen in the air, we may get an indirect estimate for the respiratory rate needed to meet the oxygen need of the subject. This may be adapted based on heart rate by a more fine-grained model which contains a specific MET values for the different intensities of a particular physical activity, based on heart rate and activity intensity measurement, for example, from light jogging to full-speed uphill running.

The approach may be applicable to different languages. In many embodiments, the same approach may be used for different languages, and e.g. the same trained neural network may be used. Thus, in some embodiments, the processing may be language agnostic. This may reflect that many speech parameters, and the relation to breathing, may have a low sensitivity to changes in language as many language properties are the same across different languages. For example, it is common for all languages that speech do not occur during breathing in/ inspiration but during breathing out/ expiration.

Indeed, experiments performed by the Applicant has indicated that the impact on speech from breathing has similar temporal statistics in most languages and that the described approach in many embodiments and scenarios will be suitable for speech in many (if not all) languages. In many cases, no language adaptation or restriction is accordingly employed or envisaged.

In some embodiments, the process may however be specific to a specific language. For example, training the neural network using only a specific language will optimize/ train it for that specific language. Therefore, in such cases, improved performance may be achieved for speech in that language.

In some embodiments, the approach may be arranged to first detect the language and then apply settings that are specific for that language, such as loading the neural network with coefficients and parameters for that specific language. In other embodiments, the neural network may for example have been trained using different languages and the neural network may automatically adapt to different languages.

The audio apparatus(s) may specifically be implemented in one or more suitably programmed processors. For example, the artificial neural network may be implemented in one or more such suitably programmed processors. The different functional blocks, and in particular the artificial neural network, may be implemented in separate processors and/or may e.g. be implemented in the same processor. An example of a suitable processor is provided in the following.

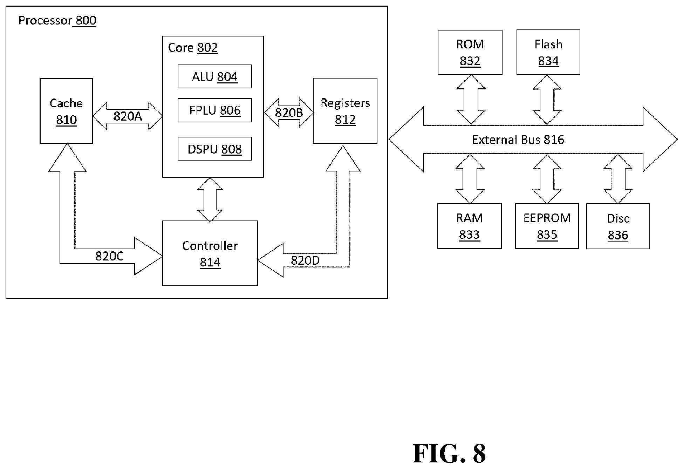

FIG. 8 is a block diagram illustrating an example processor 800 according to embodiments of the disclosure. Processor 800 may be used to implement one or more processors implementing an apparatus as previously described or elements thereof (including in particular one more artificial neural network). Processor 800 may be any suitable processor type including, but not limited to, a microprocessor, a microcontroller, a Digital Signal Processor (DSP), a Field ProGrammable Array (FPGA) where the FPGA has been programmed to form a processor, a Graphical Processing Unit (GPU), an Application Specific Integrated Circuit (ASIC) where the ASIC has been designed to form a processor, or a combination thereof.

The processor 800 may include one or more cores 802. The core 802 may include one or more Arithmetic Logic Units (ALU) 804. In some embodiments, the core 802 may include a Floating Point Logic Unit (FPLU) 806 and/or a Digital Signal Processing Unit (DSPU) 808 in addition to or instead of the ALU 804.

The processor 800 may include one or more registers 812 communicatively coupled to the core 802. The registers 812 may be implemented using dedicated logic gate circuits (e.g., flip-flops) and/or any memory technology. In some embodiments the registers 812 may be implemented using static memory. The register may provide data, instructions and addresses to the core 802.

In some embodiments, processor 800 may include one or more levels of cache memory 810 communicatively coupled to the core 802. The cache memory 810 may provide computer-readable instructions to the core 802 for execution. The cache memory 810 may provide data for processing by the core 802. In some embodiments, the computer-readable instructions may have been provided to the cache memory 810 by a local memory, for example, local memory attached to the external bus 816. The cache memory 810 may be implemented with any suitable cache memory type, for example, Metal-Oxide Semiconductor (MOS) memory such as Static Random Access Memory (SRAM), Dynamic Random Access Memory (DRAM), and/or any other suitable memory technology.

The processor 800 may include a controller 814, which may control input to the processor 800 from other processors and/or components included in a system and/or outputs from the processor 800 to other processors and/or components included in the system. Controller 814 may control the data paths in the ALU 804, FPLU 806 and/or DSPU 808. Controller 814 may be implemented as one or more state machines, data paths and/or dedicated control logic. The gates of controller 814 may be implemented as standalone gates, FPGA, ASIC or any other suitable technology.

The registers 812 and the cache 810 may communicate with controller 814 and core 802 via internal connections 820A, 820B, 820C and 820D. Internal connections may be implemented as a bus, multiplexer, crossbar switch, and/or any other suitable connection technology.

Inputs and outputs for the processor 800 may be provided via a bus 816, which may include one or more conductive lines. The bus 816 may be communicatively coupled to one or more components of processor 800, for example the controller 814, cache 810, and/or register 812. The bus 816 may be coupled to one or more components of the system.

The bus 816 may be coupled to one or more external memories. The external memories may include Read Only Memory (ROM) 832. ROM 832 may be a masked ROM, Electronically Programmable Read Only Memory (EPROM) or any other suitable technology. The external memory may include Random Access Memory (RAM) 833. RAM 833 may be a static RAM, battery backed up static RAM, Dynamic RAM (DRAM) or any other suitable technology. The external memory may include Electrically Erasable Programmable Read Only Memory (EEPROM) 835. The external memory may include Flash memory 834. The External memory may include a magnetic storage device such as disc 836. In some embodiments, the external memories may be included in a system.

The previous description (and the claims/ invention) is directed to the generation of a breathing waveform signal and the adaptation of a speech processing dependent on the breathing waveform signal. However, it will be appreciated that the generation of the breathing waveform signal is not limited to this application. The generated breathing waveform signal could be fed to a determiner which is arranged to determine a breathing/ respiratory parameter/ property from the breathing waveform signal. The breathing/ respiratory parameter/ property may be indicative of a property of the breathing of the speaker. The breathing parameter may for example be a breathing rate, breathing depth, etc. As described previously, such a breathing parameter could be used for speech processing. However, it could also be used for many other purposes and indeed could be provided to a user via a suitable user interface. The user may for example be a health professional that could make use of the provided information, e.g. for a diagnosis purposes.

Thus, whereas the described approach includes a speech processor arranged to apply a speech processing to the audio signal, the speech processing being dependent on the breathing waveform signal, it is possible for the breathing waveform signal to be used for other purposes.

The invention can be implemented in any suitable form including hardware, software, firmware or any combination of these. The invention may optionally be implemented at least partly as computer software running on one or more data processors and/or digital signal processors. The elements and components of an embodiment of the invention may be physically, functionally and logically implemented in any suitable way. Indeed the functionality may be implemented in a single unit, in a plurality of units or as part of other functional units. As such, the invention may be implemented in a single unit or may be physically and functionally distributed between different units, circuits and processors.

Although the present invention has been described in connection with some embodiments, it is not intended to be limited to the specific form set forth herein. Rather, the scope of the present invention is limited only by the accompanying claims. Additionally, although a feature may appear to be described in connection with particular embodiments, one skilled in the art would recognize that various features of the described embodiments may be combined in accordance with the invention. In the claims, the term comprising does not exclude the presence of other elements or steps.

Furthermore, although individually listed, a plurality of means, elements, circuits or method steps may be implemented by e.g. a single circuit, unit or processor. Additionally, although individual features may be included in different claims, these may possibly be advantageously combined, and the inclusion in different claims does not imply that a combination of features is not feasible and/or advantageous. Also the inclusion of a feature in one category of claims does not imply a limitation to this category but rather indicates that the feature is equally applicable to other claim categories as appropriate. Furthermore, the order of features in the claims do not imply any specific order in which the features must be worked and in particular the order of individual steps in a method claim does not imply that the steps must be performed in this order. Rather, the steps may be performed in any suitable order. In addition, singular references do not exclude a plurality. Thus references to "a", "an", "first", "second" etc. do not preclude a plurality. Reference signs in the claims are provided merely as a clarifying example shall not be construed as limiting the scope of the claims in any way.

Generally, examples of an apparatus and method for speech processing are indicated by below embodiments.

**Claims**

1.  An apparatus for speech processing of an audio signal, the apparatus comprising:

    an input (101) arranged to receive the audio signal, the audio signal comprising a speech audio component for a speaker;
    a segmenter (105) arranged to generate segments of the audio signal, each segment having a segment duration and consecutive segments having an intersegment duration being a time between the consecutive segments, the segment duration exceeding the intersegment duration so that consecutive segments overlap;
    a first generator (107) arranged to for each segment of the audio signal generate a fragment of a breathing waveform signal from the each segment of the audio signal, at least some fragments having a fragment duration exceeding the intersegment duration;
    a second generator (109) arranged to generate the breathing waveform signal by combining the fragments of the breathing waveform signal, wherein the second generator (109) is arranged to combine fragments of the at least some fragments by applying a weighted combination to samples of different fragments for the same time instant with weights of the weighted combination being determined from a fragment window function; and
    a speech processor (103) arranged to apply a speech processing to the audio signal, the speech processing being dependent on the breathing waveform signal.

2.  The apparatus of any previous claim wherein the segment duration exceeds the intersegment duration by no less than 50%.

3.  The apparatus of any previous claim wherein a segment of the audio signal includes at least a first part of the audio signal also included in a previous segment of the audio signal and a second part of the audio signal also included in a subsequent segment of the audio signal.

4.  The apparatus of any previous claim wherein a sample rate of the breathing waveform signal is lower than a sample rate of the audio signal by a factor of no less than 10.

5.  The apparatus of any previous claim wherein the first generator (107) is arranged to generate the fragments to have a lower sample rate than the segments of the audio signal.

6.  The apparatus of any previous claim wherein the segmenter (105) is arranged to generate the segments to have a lower sample rate than the audio signal.

7.  The apparatus of any previous claim wherein the first generator (107) comprises a trained artificial neural network having input nodes for receiving samples of a segment of the audio signal and output nodes arranged to provide samples of a fragment of the breathing waveform signal for the segment of the audio signal.

8.  The apparatus of any previous claim wherein the first generator (107) comprises a model for human breathing and wherein the first generator is arranged to generate the fragments from the model and to adapt a parameter of the model in response to the segments.

9.  The apparatus of any previous claim wherein the segmenter (105) is arranged to apply a frequency transform to the audio signal and to generate each segment as a matrix of time- frequency samples comprising at least samples for two different time intervals and for two different frequency ranges.

10. The apparatus of any previous claim further comprising an adapter (113) arranged to adapt at least one of the intersegment duration and the segment duration in response to at least one of a property of the audio signal and a property of the breathing waveform signal.

11. A method of processing of an audio signal, the method comprising:

    receiving the audio signal, the audio signal comprising a speech audio component for a speaker;
    generating segments of the audio signal, each segment having a segment duration and consecutive segments having an intersegment duration being a time between the consecutive segments, the segment duration exceeding the intersegment duration so that consecutive segments overlap;
    generating a fragment of breathing waveform signal for each segment of the audio signal from the each segment of the audio signal;

generating the breathing waveform signal by combining the fragments of the breathing waveform signal, the combining comprising combining fragments of the at least some fragments by applying a weighted combination to samples of different fragments for the same time instant with weights of the weighted combination being determined from a fragment window function; and

applying a speech processing to the audio signal, the speech processing being dependent on the breathing waveform signal.

12. A computer program product comprising computer program code means adapted to perform all the steps of claim 11 when said program is run on a computer.

**Patentansprüche**

1. Einrichtung zur Sprachverarbeitung eines Audiosignals, wobei die Einrichtung Folgendes umfasst:

einen Eingang (101), der zum Empfangen des Audiosignals angeordnet ist, wobei das Audiosignal eine Sprachaudiokomponente für einen Lautsprecher umfasst;

einen Segmentierer (105), der zum Erzeugen von Segmenten des Audiosignals angeordnet ist, wobei jedes Segment eine Segmentdauer aufweist und aufeinanderfolgende Segmente eine Zwischensegmentdauer aufweisen, die eine Zeit zwischen den aufeinanderfolgenden Segmenten ist, wobei die Segmentdauer die Zwischensegmentdauer überschreitet, sodass sich aufeinanderfolgende Segmente überlappen;

einen ersten Generator (107), der dazu angeordnet ist, für jedes Segment des Audiosignals ein Fragment eines Atemwellenformsignals aus jedem Segment des Audiosignals zu erzeugen, wobei mindestens einige Fragmente eine Fragmentdauer aufweisen, die die Zwischensegmentdauer überschreitet;

einen zweiten Generator (109), der zum Erzeugen des Atemwellenformsignal durch Kombinieren der Fragmente des Atemwellenformsignals angeordnet ist, wobei der zweite Generator (109) zum Kombinieren von Fragmenten der mindestens einigen Fragmente durch Anwenden einer gewichteten Kombination auf Abtastwerte verschiedener Fragmente für denselben Zeitpunkt angeordnet ist, wobei Gewichte der gewichteten Kombination aus einer Fragmentfensterfunktion bestimmt werden; und

einen Sprachprozessor (103), der zum Anwenden einer Sprachverarbeitung auf das Audiosignal angeordnet ist, wobei die Sprachverarbeitung vom Atemwellenformsignal abhängig ist.

2. Einrichtung nach einem vorstehenden Anspruch, wobei die Segmentdauer die Zwischensegmentdauer um mindestens 50% übersteigt.

3. Einrichtung nach einem vorstehenden Anspruch, wobei ein Segment des Audiosignals mindestens einen ersten Teil des Audiosignals, der auch in einem vorhergehenden Segment des Audiosignals beinhaltet ist, und einen zweiten Teil des Audiosignals, der auch in einem nachfolgenden Segment des Audiosignals beinhaltet ist, beinhaltet.

4. Einrichtung nach einem vorstehenden Anspruch, wobei eine Abtastrate des Atemwellenformsignals um einen Faktor von mindestens 10 niedriger ist als eine Abtastrate des Audiosignals.

5. Einrichtung nach einem vorstehenden Anspruch, wobei der erste Generator (107) zum Erzeugen der Fragmente angeordnet ist, sodass sie eine niedrigere Abtastrate als die Segmente des Audiosignals aufweisen.

6. Einrichtung nach einem vorstehenden Anspruch, wobei der Segmentierer (105) zum Erzeugen der Segmente angeordnet ist, sodass sie eine niedrigere Abtastrate als das Audiosignal aufweisen.

7. Einrichtung nach einem vorstehenden Anspruch, wobei der erste Generator (107) ein trainiertes künstliches neuronales Netzwerk, das Eingangsknoten zum Empfangen von Abtastwerten eines Segments des Audiosignals aufweist, und Ausgangsknoten, die zum Bereitstellen von Abtastwerten eines Fragments des Atemwellenformsignals für das Segment des Audiosignals angeordnet sind, umfasst.

8. Einrichtung nach einem vorstehenden Anspruch, wobei der erste Generator (107) ein Modell menschlicher Atmung umfasst und wobei der erste Generator zum Erzeugen der Fragmente aus dem Modell und zum Anpassen eines Parameters des Modells als Reaktion auf die Segmente angeordnet ist.

9. Einrichtung nach einem vorstehenden Anspruch, wobei der Segmentierer (105) zum Anwenden einer Frequenztransformation auf das Audiosignal und zum Erzeugen jedes Segments als eine Matrix von Zeit-Frequenz-Abtastwerten, die mindestens Abtastwerte für zwei verschiedene Zeitintervalle und für zwei verschiedene Frequenzbereiche umfasst, angeordnet ist.

10. Einrichtung nach einem vorstehenden Anspruch, ferner umfassend einen Adapter (113), der zum Anpassen mindestens einer der Zwischensegmentdauer und der Segmentdauer als Reaktion auf mindestens eine von einer Eigenschaft des Audiosignals und einer Eigenschaft des Atemwellenformsignals angeordnet ist.

11. Verfahren zum Verarbeiten eines Audiosignals, wobei das Verfahren Folgendes umfasst:

Empfangen des Audiosignals, wobei das Audiosignal eine Sprachaudiokomponente für einen Lautsprecher umfasst;
Erzeugen von Segmenten des Audiosignals, wobei jedes Segment eine Segmentdauer aufweist und aufeinanderfolgende Segmente eine Zwischensegmentdauer aufweisen, die eine Zeit zwischen den aufeinanderfolgenden Segmenten ist, wobei die Segmentdauer die Zwischensegmentdauer überschreitet, sodass sich aufeinanderfolgende Segmente überlappen;
Erzeugen eines Fragments des Atemwellenformsignals für jedes Segment des Audiosignals aus jedem Segment des Audiosignals;
Erzeugen des Atemwellenformsignal durch Kombinieren der Fragmente des Atemwellenformsignals, wobei das Kombinieren ein Kombinieren von Fragmenten der mindestens einigen Fragmente durch Anwenden einer gewichteten Kombination auf Abtastwerte verschiedener Fragmente für denselben Zeitpunkt umfasst, wobei Gewichte der gewichteten Kombination aus einer Fragmentfensterfunktion bestimmt werden; und
Anwenden einer Sprachverarbeitung auf das Audiosignal, wobei die Sprachverarbeitung vom Atemwellenformsignal abhängig ist.

12. Computerprogrammprodukt, das Computerprogrammcodemittel umfasst, die dazu ausgelegt sind, alle Schritte nach Anspruch 11 durchzuführen, wenn das Programm auf einem Computer ausgeführt wird.

**Revendications**

1. Appareil de traitement de la parole à partir d'un signal audio, cet appareil comprenant :

une entrée (101) agencée de façon à recevoir le signal audio, le signal audio comprenant une composante audio vocale pour un haut-parleur ;
un segmentateur (105) agencé de façon à générer des segments du signal audio, chaque segment présentant une durée de segment et les segments consécutifs présentant une durée intersegment qui est un temps entre les segments consécutifs, la durée du segment dépassant la durée intersegment de sorte que les segments consécutifs se chevauchent ;
un premier générateur (107) agencé de façon à générer, pour chaque segment du signal audio, un fragment de signal de forme d'onde respiratoire à partir de chaque segment du signal audio, au moins certains fragments présentant une durée de fragment supérieure à la durée intersegment ;
un deuxième générateur (109) agencé de façon à générer le signal de forme d'onde respiratoire en combinant les fragments du signal de forme d'onde respiratoire, dans lequel le deuxième générateur (109) est conçu pour combiner des fragments des au moins certains fragments en appliquant une combinaison pondérée à des échantillons de différents fragments pour le même instant, les pondérations de la combinaison pondérée étant déterminées à partir d'une fonction de fenêtre de fragment ; et
un processeur de parole (103) agencé pour appliquer un traitement de la parole au signal audio, le traitement de la parole étant dépendant du signal de forme d'onde respiratoire.

2. Appareil selon une quelconque revendication précédente, dans lequel la durée du segment dépasse la durée intersegment d'au moins 50 %.

3. Appareil selon une quelconque revendication précédente, dans lequel un segment du signal audio inclut au moins une première partie du signal audio également incluse dans un segment précédent du signal audio et une seconde partie du signal audio également incluse dans un segment ultérieur du signal audio.

4. Appareil selon une quelconque revendication précédente dans lequel la fréquence d'échantillonnage du signal de forme d'onde respiratoire est inférieure à la fréquence d'échantillonnage du signal audio d'un facteur d'au moins 10.

5. Appareil selon une quelconque revendication précédente, dans lequel le premier générateur (107) est agencé de façon à générer les fragments afin qu'ils présentent une fréquence d'échantillonnage inférieure à celle des segments du signal audio.

6. Appareil selon une quelconque revendication précédente dans lequel le segmentateur (105) est agencé pour générer les segments afin qu'ils présentent une fréquence d'échantillonnage inférieure à celle du signal audio.

7. Appareil selon une quelconque revendication précédente dans lequel le premier générateur (107) comprend un réseau neuronal artificiel entraîné doté de nœuds d'entrée pour recevoir des échantillons d'un segment du signal audio et des nœuds de sortie agencés de façon à fournir des échantillons d'un fragment du signal de forme d'onde respiratoire pour le segment du signal audio.

8. Appareil selon une quelconque revendication précédente dans lequel le premier générateur (107) comprend un modèle de respiration humaine et dans lequel le premier générateur est agencé pour générer les fragments à partir du modèle et pour adapter un paramètre du modèle en réponse aux segments.

9. Appareil selon une quelconque revendication précédente dans lequel le segmentateur (105) est agencé de façon à appliquer une transformation de fréquence au signal audio et à générer chaque segment sous forme d'une matrice d'échantillons temps-fréquence comprenant au moins des échantillons pour deux intervalles de temps différents et pour deux plages de fréquences différentes.

10. Appareil selon une quelconque revendication précédente comprenant en outre un adaptateur (113) agencé de façon à adapter au moins une parmi la durée intersegment et la durée du segment en réponse à au moins une propriété du signal audio et une propriété du signal de forme d'onde respiratoire.

11. Procédé de traitement d'un signal audio, le procédé comprenant :

la réception du signal audio, le signal audio comprenant une composante audio vocale pour un locuteur ;
la génération de segments du signal audio, chaque segment présentant une durée de segment et des segments consécutifs présentant une durée intersegment correspondant au temps entre les segments consécutifs, la durée du segment dépassant la durée intersegment de sorte que les segments consécutifs se chevauchent ;
la génération d'un fragment de signal de forme d'onde respiratoire pour chaque segment du signal audio à partir de chaque segment du signal audio ;
la génération du signal de forme d'onde respiratoire en combinant les fragments du signal de forme d'onde respiratoire, la combinaison comprenant la combinaison de fragments des au moins certains fragments en appliquant une combinaison pondérée à des échantillons de différents fragments pour le même instant, les pondérations de la combinaison pondérée étant déterminés à partir d'une fonction de fenêtre de fragment ; et l'application d'un traitement de la parole au signal audio, ce traitement dépendant du signal de forme d'onde respiratoire.

12. Produit de programme informatique comprenant des moyens de code de programme informatique adaptés pour réaliser toutes les étapes de la revendication 11 lorsque ledit programme est exécuté sur un ordinateur.

FIG. 1

| | f1 | | f3 | | f5 |
| | | f2 | | f4 | |

201

203

**FIG. 2**

**FIG. 3**

$$l = \max\left(0, \sum_n w_n x_n\right)$$

**FIG. 4**

**FIG. 5**

**FIG. 6**

FIG. 7

Processor 800

Core 802

ALU 804

FPLU 806

DSPU 808

Cache 810

820A

820B

Registers 812

820C

Controller 814

820D

ROM 832

Flash 834

External Bus 816

RAM 833

EEPROM 835

Disc 836

FIG. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20090098981 A1

- US 7529670 B1

**Non-patent literature cited in the description**

- **NALLANTHIGHAL et al.** Deep learning architectures for estimating breathing signal and respiratory parameters from speech recordings. *Neural Networks*, 01 September 2021, vol. 141, ISSN 0893-6080, 211-224

- **XAVIER GLOROT ; ANTOINE BORDES ; YOSHUA BENGIO**. Proceedings of the Fourteenth International Conference on Artificial Intelligence and Statistics. PMLR, 2011, vol. 15, 315-323
- **HOCHREITER, SEPP ; JÜRGEN SCHMIDHUBER**. Long short-term memory. *Neural computation*, 1997, vol. 9 (8), 1735-1780